# EUROPEAN PATENT SPECIFICATION

(11) **EP 0 608 555 B1**
(45) Date of publication and mention of the grant of the patent: **30.07.1997**
(21) Application number: 93120712.0
(22) Date of filing: 23.12.1993
(51) Int. Cl.: C05F 9/02, C05F 17/00, B09B 3/00

(54) **Organic kitchen garbage disposal system**
Vorrichtung zur Entsorgung von Küchenabfällen
Dispositif d'élimination de déchets ménagers

(30) Priority: 28.12.1992 JP 348882/92; 29.01.1993 JP 34702/93; 20.07.1993 JP 179138/93
(43) Date of publication of application: 03.08.1994
(73) Proprietor: SANYO ELECTRIC CO. LTD, Moriguchi-City, Osaka 570 (JP)
(72) Inventor: Morishita, Takuya, c/o SANYO ELECTRIC CO., Ltd., Moriguchi-City, Osaka 570 (JP); Yasuda, Hideo, c/o SANYO ELECTRIC CO., Ltd., Moriguchi-City, Osaka 570 (JP); Fukumoto, Akihiro, c/o SANYO ELECTRIC CO., Ltd., Moriguchi-City, Osaka 570 (JP); Aida, Kenji, c/o SANYO ELECTRIC CO., Ltd., Moriguchi-City, Osaka 570 (JP); Toyooka, Kenji, c/o SANYO ELECTRIC CO., Ltd., Moriguchi-City, Osaka 570 (JP); Sasakura, Hiroyuki, c/o SANYO ELECTRIC CO., Ltd., Moriguchi-City, Osaka 570 (JP); Hirata, Toshi, c/o SANYO ELECTRIC CO., Ltd., Moriguchi-City, Osaka 570 (JP); Onishi, Yoshihisa, c/o SANYO ELECTRIC CO., Ltd., Moriguchi-City, Osaka 570 (JP); Sibuya, Yasuyuki, c/o SANYO ELECTRIC CO., Ltd., Moriguchi-City, Osaka 570 (JP); Ioku, Katsunori, c/o SANYO ELECTRIC CO., Ltd., Moriguchi-City, Osaka 570 (JP)
(74) Representative: von Kreisler, Alek, Dipl.-Chem.

(56) References cited:
- EP-A- 0 433 310
- EP-A- 0 543 041
- US-A- 4 040 810
- PATENT ABSTRACTS OF JAPAN vol. 14, no. 314 (C-737)(4257) 5 July 1990 & JP-A-02 107 358 (MITSUBISHI ELECTRIC CORP)

## Description

The present invention relates to an organic kitchen garbage disposal system for the disposal of kitchen garbage generated in kitchens (food garbage) by means of the decomposing action of the activities of aschelminthes such as philodina and diplogaster, and micro-organisms such as protozoa and bacteria.

One of the methods of disposing of the garbage generated every day in the kitchens of homes and eating establishments utilizes the decomposing actions of aschelminthes such as philodina and diplogaster, and microorganisms such as protozoa and bacteria. This method has been viewed as a promising technology because it helps to reduce the volume of waste and contributes to the decrease of processing load on the waste incineration facilities and sewage treatment plants, and is also favorable in the aspect of environment conservation.

As an organic kitchen garbage disposal apparatus, a compost vessel has long been known. It is a cylindrical vessel having a lid covering an opening on one side, and is partially embedded to an appropriate depth in the ground with another opening on the other side facing downward. After charging kitchen garbage into the vessel by opening the lid, the vessel is left to stand with the lid being closed, so that the aschelminthes and micro-organisms reproducing in the soil decompose the kitchen garbage into compost.

In CH-A-671 219 (D1) a disposal apparatus for decomposing organic material, e.g. kitchen garbage, is described. A fixed process cell comprises a medium to cultivate worms and micro-organisms performing decomposing of the organic material. In the process cell horizontal beams are arranged providing the process cell with air and water to keep the decomposing process running. Because of the horizontal beams, it is not possible to turn the material inside the cell. Therefore, the decomposing rate is not high. To establish a sufficient apparatus for an average household, a big process cell is necessary.

However, the process of decomposing the kitchen garbage in the compost vessel and therefore the rate of composting are slow, thus the small processing capacity limits the applicability of the compost vessel. Also the compost vessel requires the existence of soil wherein it is embedded, and a larger processing capacity requires a vessel of greater volume. It also has a problem of the odor generated in the process of decomposition leaking into the environment, which makes it unsuitable to the application in urban areas crowded with collective housing buildings. When used in an urban area, it also has a problem that the compost produced through the decomposition process is difficult to dispose with.

A method of grinding and dewatering kitchen garbage and automatically packing it in waste bags which are thereafter dumped has been proposed, for example, in the Japanese Patent Application Laid-Open No. 4-156959 (1992). However, this method requires the disposal of the waste bags containing the kitchen garbage, resulting in the trouble of dumping operation and a problem in view of environment conservation.

It is an object of the invention to provide an organic kitchen garbage disposal apparatus which is capable of decomposing and disposing of kitchen garbage in a short period of time.

This object is, according to the invention, achieved by the features of claim 1.

The invention provides an organic kitchen garbage disposal system wherein kitchen garbage generated in a kitchen is charged after being ground into fine pieces, into a process vessel which houses a medium where aschelminthes such as philodina and diplogaster and micro-organisms such as protozoa and bacteria are cultivated, then the process vessel is rotated to mix the medium and the kitchen garbage, thereby to decompose the kitchen garbage into inorganic materials (carbon dioxide, water) by means of the activities of the aschelminthes and micro-organisms.

In the organic kitchen garbage disposal system of the invention, a kitchen garbage discharge port (or a kitchen garbage discharge port in case a grinder is employed) leading to a process vessel is arranged to face the center of rotation of the process vessel. This arrangement makes it possible to charge kitchen garbage while the process vessel is rotating, resulting in high efficiency of mixing the medium and the kitchen garbage. The kitchen garbage discharge port leading to the process vessel is provided with a guide body having an open end on the side of the process vessel rotating direction. This arrangement causes the medium to rotate together with the process vessel as the process vessel rotates, so that the medium moves up to the top and drops therefrom by its own weight. Therefore, the guide body will not be blocked by the medium on the side of the process vessel rotating direction, so that the kitchen garbage can be charged efficiently into the process vessel and the charge kitchen garbage is trapped by the falling medium, thereby to be mixed efficiently.

The organic kitchen garbage disposal system of the invention is provided with a sensor which detects the angular position of the rotating process vessel and a stopping mechanism which stops the process vessel, upon completion of the mixing of medium and kitchen garbage, at a specified stopping position (a position where an inspection port which can open and close faces upward, or a position where the kitchen garbage discharge port is aligned with the kitchen garbage introduction opening of the process vessel). This makes the position of the process vessel at the end of rotation always constant.

The organic kitchen garbage disposal system of the invention performs coordinated control of the process vessel rotation and the grinding operation of the grinder. Thus the medium and kitchen garbage are efficiently mixed in the process vessel, and the kitchen garbage in the grinder is reliably discharged into the process vessel.

The organic kitchen garbage disposal system of the invention controls the process vessel to rotate intermittently. The medium is fed with oxygen to activate the aschelminthes and micro-organisms in such an operation, thereby improving the efficiency of garbage disposal.

The organic kitchen garbage disposal system of the invention is provided with a sensor which detects the weight of the process vessel and, according to the detected weight, it is determined whether the kitchen garbage is well processed and whether additional medium should be supplied, with the result of judgment being displayed to inform the operator. Thus the state of kitchen garbage processing in the process vessel can be easily monitored.

The organic kitchen garbage disposal system of the invention monitors the overload state of the decomposition process of kitchen garbage by the aschelminthes and micro-organisms (state of the capacity of the aschelminthes and micro-organisms to decompose the kitchen garbage being exceeded by charging an excessive amount of kitchen garbage into the process vessel) by means of a sensor such as a water level sensor, an odor sensor and a BOD (biochemical oxygen demand) sensor and, if an overload state is detected, gives a warning to inhibit further charging of kitchen garbage. Thus generation of odor and discharge of stale water due to a continued overload state can be prevented reliably.

The above and further objects and features of the invention will more fully be apparent from the following detailed description with accompanying drawings.

Fig.1 is a sectional drawing in the front view illustrative of an organic kitchen garbage disposal system of the invention.

Fig.2 is a drawing illustrative of the operation of the organic kitchen garbage disposal system of the invention.

Fig.3 is a cross sectional drawing viewed in the direction of III-III line of Fig.1.

Fig.4 is a block diagram of a control system of the organic kitchen garbage disposal system of the invention.

Fig.5 is a plan view drawing illustrative of a control panel of the organic kitchen garbage disposal system of the invention.

Fig.6 is a drawing illustrative of the change in the weight of a process vessel with time.

Fig.7 is a sectional drawing in the front view illustrative of another organic kitchen garbage disposal system of the invention.

Fig.8 is a sectional drawing in the front view illustrative of further another organic kitchen garbage disposal system of the invention.

Fig.9 is a sectional drawing in the front view illustrative of further another organic kitchen garbage disposal system of the invention.

Fig.10 is a sectional drawing in the front view illustrative of further another organic kitchen garbage disposal system of the invention.

Fig.11 is a sectional drawing in the side view illustrative of further another organic kitchen garbage disposal system of the invention.

Fig.12 is a sectional drawing in the side view illustrative of further another organic kitchen garbage disposal system of the invention.

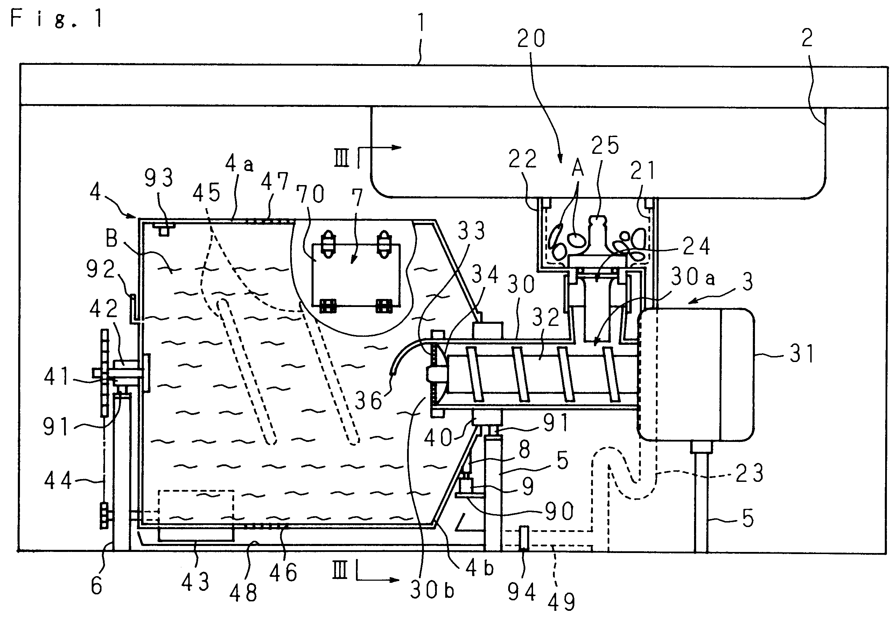

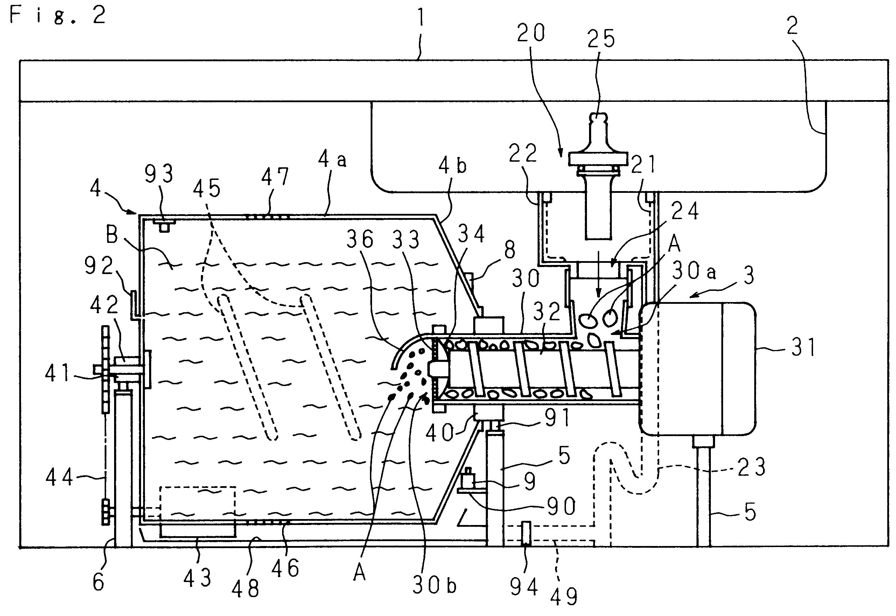

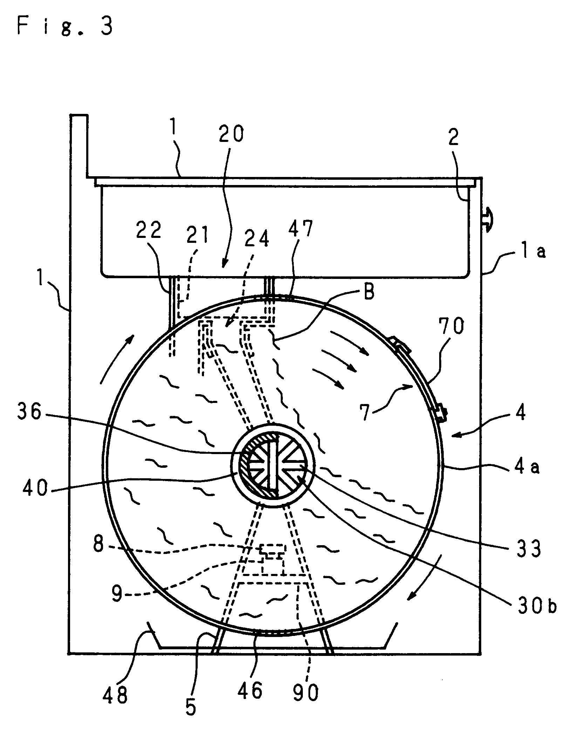

The invention will now be described in detail with reference to the drawings illustrative of the preferred embodiments. Fig.1 and Fig.2 are sectional drawings in the front view illustrative of an embodiment of the organic kitchen garbage disposal system of the invention. Fig.3 is a cross sectional drawing viewed in the direction of III-III line of Fig.1.

In the drawings, numeral 1 denotes a sink cabinet having a sink 2 installed on the top. The sink 2 has a drain port 20 opening at the bottom thereof, which connects to a kitchen garbage receiver 22 having a drain basket 21 freely detachably installed therein. Connected to the bottom of the kitchen garbage receiver 22 is a drainage pipe 23 having an opening at the outside of the drain basket 21. Below the bottom of the kitchen garbage receiver 22 near at the center thereof, a kitchen garbage charging port 24 is formed having an opening in the drain basket 21.

The drainage pipe 23 extends through the bottom of the sink cabinet 1 to the outside, terminating at a sewerage not shown in the drawing, connecting thereto. The top end of the drainage pipe 23 is always open at the bottom of the kitchen garbage receiver 22. On the other hand, the kitchen garbage charging port 24 is usually closed airtight by a pusher 25 as shown in Fig.1. Waste water used in the sink 2 for kitchen work flows from the drain port 20 into the drain basket 21, wherein it drips through multiple holes made in the circumference thereof into the kitchen garbage receiver 22 and passes through the drainage pipe 23 to be discharged into sewage, whereas kitchen garbage A introduced into the kitchen garbage receiver 22 along with the waste water is temporarily stored in the drain basket 21 as shown in Fig.1.

The organic kitchen garbage disposal apparatus of the invention is installed in the sink cabinet 1 constituted as described above, and comprises a grinder 3 which shreds the kitchen garbage A and a process vessel 4 which receives the kitchen garbage A ground by the grinder 3.

The grinder 3 comprises a conveyance pipe 30 installed substantially horizontally on a base stand 5 which is erected on the bottom in the sink cabinet 1, a grinder motor 31 securely mounted at the base end of the conveyance pipe 30, and a conveyance screw 32 which revolves in the conveyance pipe 30 about the center line thereof. The conveyance pipe 30 has a receiving port 30a which opens upward and is formed at the base end thereof, with the receiving port 30a communicating to the kitchen garbage charging port 24 which opposes thereto from the above via a connecting pipe 26. The discharge port 30b which opens at the front end of the conveyance pipe 30 is provided with a plurality of fixed blades 33 secured radially (see Fig.3). The tip of the conveyance screw 32 facing the discharge port 30b has a rotary blade 34 which rotates while sliding in contact with the fixed blades 33 as th conveyance screw 32 revolves. The conveyance pipe 30 is, at the front end thereof, provided with a guide body 36 which is open at the side where the process vessel 4 to be described later rotates, namely at the right-hand side of the process vessel rotation (see Fig.3). The guide body 36 facilitates efficient mixing of the kitchen garbage A discharged from the grinder 3 with a medium B to be described later.

The process vessel 4 is a container having a body section 4a having a shape of bottomed cylinder and a diameter reducing section 4b connecting to one end of the body section 4a which reduces the diameter therefrom toward the opposite end. The sink cabinet 1 is provided with a support leg 6 erected at the bottom at an appropriate distance from the base stand 5. The process vessel 4 is supported at the end of the diameter reducing section 4b by a bearing 40 which is externally fitted in the conveyance pipe 30 at the front end thereof, and a pivot axis 42 installed on the other side (opposite to the diameter reducing section 4b) of the body section 4a concentrically projecting therefrom is supported by a bearing 41 which is fixed on the support leg 6, thereby allowing the process vessel 4 to freely rotate around the substantially horizontal center axis.

The conveyance pipe 30 of the grinder 3 protrudes into the process vessel 4 by an appropriate length, with the discharge port 30b at the front end of the conveyance pipe 30 being open inside the process vessel 4. The front end of the pivot shaft 42 protruding on the other side of the process vessel 4 is connected via a transmission chain 44 to an output end of a mixing motor 43 fixed at the bottom of the sink cabinet 1, so that the process vessel 4 is driven to rotate around the center axis as the mixing motor 43 rotates.

The process vessel 4 contains the medium B inside thereof to cultivate aschelminthes such as philodina and diplogaster, and micro-organisms such as protozoa and bacteria. The medium B is a culture medium to provide an environment suitable for the reproduction of various aschelminthes and micro-organisms in the process vessel 4 which houses thereof. Fine wooden pieces such as saw dust which is turned into porous form in a specified process, rice chaff, rice bran and soil, for example, are used as the culture medium for the aschelminthes and micro-organisms. The inner wall of the process vessel 4 is provided with a plurality of stirring ribs 45 in the form of flat plates being installed thereon slanting by specified angles to the center axis and extending inward in the radial directions. As the mixing motor 43 drives the process vessel to rotate, the medium B in the process vessel 4 is agitated to move in the axial and circumferential directions by the action of the stirring ribs 45.

The body section 4a of the process vessel 4 has an inspection port 7 formed to penetrate the wall at a point in the circumferential direction as shown in Fig.3. The inspection port 7 is used for inspection of the inside of the process vessel 4 as described later. As shown in Fig.1, the inspection port 7 can be opened and closed by means of a lid plate 70 which is hinged on one side thereof onto the outside of the body section 4a.

The body section 4a has also a plurality of drip holes 46 and vent holes 47, both comprising small round holes, formed to penetrate the circumferential wall thereof. These holes are arranged at positions opposite right to each other in the radial direction. Relative positions of the holes 46, 47 and the inspection port 7 in the circumferential direction are arranged as shown in Fig.3, so that, when the drip hole 46 faces vertically downward and the vent hole 47 faces vertically upward, the inspection port 7 faces upward being inclined by a specified angle with respect to a front door 1a of the sink cabinet 1. Installed at the bottom of the sink cabinet 1 below the process vessel 4 is a drip pan 48 facing the drip hole 46 at its vertically downward position, with the drip pan 48 communicating to the drainage pipe 23 at the middle thereof via a communicating pipe 49 which is connected to one side of the drip pan 48 as shown in Fig. 1 and Fig. 2.

The diameter reducing section 4b of the process vessel 4 has a sensing projection 8 installed at a point in the circumferential direction on the outer circumference thereof. The base stand 5 which supports the process vessel 4 at the diameter reducing section 4b side has a sensor base 90 installed to protrude in substantially horizontal direction below the diameter reducing section 4b. The sensor base 90 bears a microswitch 9 fixed thereon at a position corresponding to the rotating path of the sensing projection 8 in accordance to the rotation of the process vessel 4. The position of installing the sensing protrusion 8 in the circumferential direction is set so that the sensing protrusion 8 makes contact with the sensing end of the microswitch 9 at the angular position of the process vessel 4 as shown in Fig.3. Thus the microswitch 9 turns on when it touches the sensing projection 8, to serve as an angular position sensor to detect that the process vessel 4 is at the angular position shown in Fig.3.

The process vessel 4 is supported by the bearings 40, 41 via weight sensors 91, 91 interposed in-between to detect the weight of the process vessel 4. The weight sensors 91 may be load cells, for example, which detect the load of the process vessel 4 on the bearings 40 and the bearing 41. The weight sensors 91 may also be constituted otherwise such as strain gauges attached to the base stand 5 and the support leg 6, which support the process vessel 4, to detect the strains thereof, thereby to calculate the weight of the process vessel 4 according to the result of detection.

A water level sensor 92 is installed on the side wall of the process vessel 4 to detect the water level in the process vessel 4 thereby serving as a sensor of the overload state of the aschelminthes and micro-organisms. The overload state sensor is not limited to the water level sensor 92, but may be an odor sensor 93 which detects odor in the process vessel 4, or a BOD sensor 94 which detects the BOD value of the waste water discharged from the process vessel 4. For example, the odor sensor 93 may be installed on the top wall of the process vessel 4, and the BOD sensor may be installed in the communicating pipe 49 as shown in Fig.1 and Fig.2.

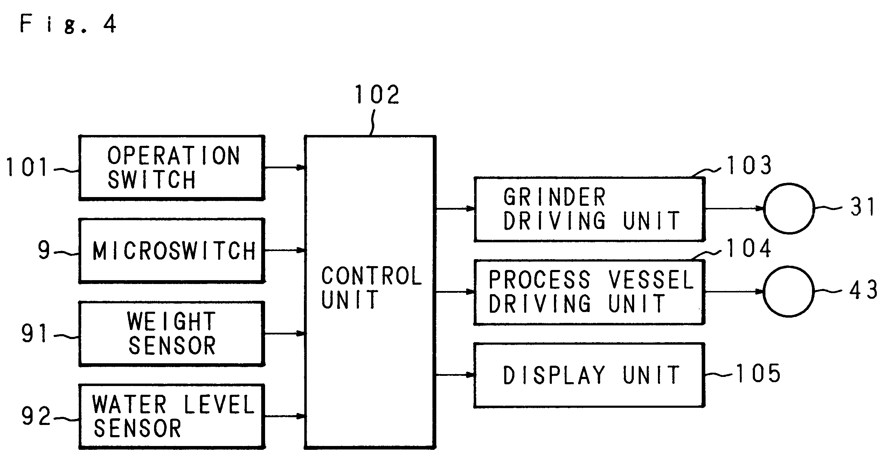

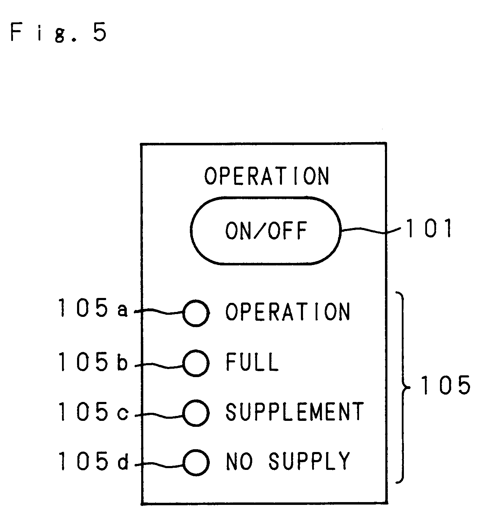

Fig.4 is a block diagram of a control system of the organic kitchen garbage disposal system of the invention. The input section of a control unit 102 which controls the operation of the system is connected to an operation switch 101 for the operation control, the above-described microswitch 9, the weight sensor 91 and the water level sensor 92. The output section of the control unit 102 is connected to the grinder motor 31 via a grinder driving unit 103, the mixing motor 43 via a process vessel driving unit 104 and a display unit 105 which indicates the operation status of the system. Fig.5 is a plan view drawing of the control panel having the operation switch 101 and the display unit 105, and the control panel is installed at the front face of the sink cabinet 1.

Operation of the organic kitchen garbage disposal system of the invention will now be described below. When one is engaged in kitchen work, the pusher 25 is inserted into the kitchen garbage charging port 24 of the grinder 3 to block the opening of the drain basket 21 as shown in Fig.1. In this state, water discharged from the sink 2 is discharged into the drainage pipe 23 via the drain basket 21.

To process the kitchen garbage A, the pusher 25 is pulled out when an appropriate amount of kitchen garbage A has accumulated in the drain basket 21 as shown in Fig.2, thereby introducing the kitchen garbage A from the drain basket 21 into the charging port 24, and the operation switch 101 is turned on so that an operation lamp 105a located on the control panel (see Fig.3) illuminates.

As the operation switch 101 is turned on, the control unit 102 sends a drive signal to the grinder driving unit 103 and the process vessel driving unit 104. The grinder motor 31 starts to operate according to the drive signal, thereby to drive the conveyance screw 32 of the grinder 3 to rotate, and driving force of the mixing motor 43 according to the drive signal is transmitted to the process vessel 4 by the transmission chain 44, thereby driving the process vessel 4 to rotate around the center axis. The kitchen garbage A introduced into the kitchen garbage charging port 24 is directed through the communicating pipe 26 to the receiving port 30a of the grinder 3 as shown in Fig.2, where the kitchen garbage is moved toward the front end of the conveyance pipe 30 through the inside thereof by the revolution of the conveyance screw 32 located below the receiving port 30a. At this time, the pusher 25 is used to squeeze the kitchen garbage A which has been charged into the kitchen garbage charging port 24 downward as indicated by an arrow in Fig.2, to assist the transfer of the kitchen garbage to the conveyance screw 32.

The rotary blade 34 installed at the front end of the conveyance screw 32 also rotates as the latter rotates, so that the kitchen garbage A being moved as described above is ground by the rotary blade 34 and the fixed blades 33 which make sliding contact with the former, thereby being turned into fine pieces and introduced into the process vessel 4 from the discharge port 30b. At this time, because the discharge port 30b of the grinder 3 is made to face the center of rotation of the process vessel 4 which is driven to rotate by the mixing motor 43, the kitchen garbage A can be charged while the process vessel 4 is rotating, and the kitchen garbage A introduced into the process vessel 4 is mixed with the medium B in the process vessel 4, thereby distributed in the medium B substantially uniformly.

Because the guide body 36 covers the discharge port 30b of the grinder 3 on the opposite side of the rotating direction of the process vessel 4 and opens the discharge port 30b on the side of the rotating direction of the process vessel 4, the medium B turns along with the process vessel 4 as the latter rotates to reach the top position wherefrom it drops by its weight. Consequently, the discharge port 30b of the grinder 3 on the side of the rotating direction of the process vessel 4 whereon the guide body 36 is open will not be blocked by the medium B, enabling efficient discharge of the kitchen garbage A from the discharge port 30b of the grinder 3. The kitchen garbage A discharged from the discharge port 30b of the grinder 3 is also entrapped by the falling medium B and is well mixed therewith.

As the process vessel 4 rotates, the stirring ribs 45 formed on the inside of the process vessel 4 move the kitchen garbage A and the medium B toward the side face of the process vessel 4 which opposes the grinder 3, to prevent the kitchen garbage A from concentrating locally in the process vessel 4. The control unit 102 controls the mixing motor 43 which drives the process vessel 4 rotation so that the mixing motor 43 starts to operate simultaneously as the grinder motor 31 starts to drive the grinder 3 in synchronization. Consequently, even if kitchen garbage A left in the previous processing run remains near the discharge port 30b of the grinder 3, the process vessel 4 starts to rotate at the same time as the grinder 3 starts to run, therefore the kitchen garbage remaining near the discharge port 30b of the grinder 3 is mixed with new kitchen garbage A before the new kitchen garbage A is discharged from the grinder 3 into the process vessel 4, thus preventing the kitchen garbage A from concentrating locally in the process vessel 4 and improving the processing efficiency.

The medium B is a culture medium to provide an environment suitable for the reproduction of various aschelminthes such as philodina and diplogaster and micro-organisms such as protozoa and bacteria. Fine pieces of ground kitchen garbage A which are mixed with the medium B are digested by various aschelminthes and micro-organisms contained by the kitchen garbage itself and the aschelminthes and micro-organisms which reproduce in the medium B, eventually being decomposed into water (H₂O) and carbon dioxide (CO₂). Because the kitchen garbage A charged into the process vessel 4 has been ground by the grinder 3, it is decomposed and disappear in a relatively short period of time.

Part of water generated in this decomposition process is taken into the medium B to automatically control the water content in the medium B, thereby maintaining an environment favorable for further reproduction of the aschelminthes and micro-organisms. The rest of the generated water flows through the drip hole 46 which opens downward into the drip pan 48, from which it is discharged through the communicating pipe 49 to the drainage pipe 23. Carbon dioxide generated in this decomposition process is discharged through the vent hole 47 which opens upward into the atmosphere. Thus the kitchen garbage A introduced into the process vessel 4 is decomposed by the aschelminthes and micro-organisms which reproduce in the medium B, thereby to substantially completely disappear without remaining in the process vessel 4.

Although the mixing motor 43 which drives the rotation of the process vessel 4 is started simultaneously as the grinder motor 31 starts to drive the grinder 3 in synchronization, the mixing motor 43 may alternately be started after a lapse of a period of time required for the kitchen garbage A which has been charged into the grinder 3 to be discharged into the process vessel 4 after the start of the grinder motor 31 of the grinder 3. This arrangement makes it possible to reduce the operation time of the mixing motor 43 and thereby to reduce the energy loss.

The operation of the system described above is stopped by turning off the operation switch 101. While the operation switch 101 is turned off when the operator thinks it appropriate, the control unit 102 sends a signal to stop the grinder motor 31 to the grinder driving unit 103 in a specified period of time after the operation switch 101 is turned off. The control unit 102 works in this way for the purpose of keeping the grinder 3 operating for a specified period of time after the operation switch 101 has been turned off, and thereby ensuring that all kitchen garbage A introduced into the grinder 3 be discharged completely into the process vessel 4. This scheme makes it possible to prevent the kitchen garbage A from remaining in the conveyance pipe 30 and rotting.

The control unit 102 sends a signal to the process vessel driving unit 104 to stop the mixing motor 43 upon a lapse of a specified period of time further after the signal to stop the grinder motor 31 has been sent, according to the input from the microswitch 9 which detects the angular position of the process vessel 4, more specifically, according to the operation of the microswitch 9 turning on. This sequence of operations ensures that the process vessel 4 rotates as required after discharge of the kitchen garbage A from the grinder 3 is completed, thereby making the kitchen garbage A and the medium B well mixed and distributing the kitchen garbage A uniformly in the process vessel 4. Because the stop signal is issued when the microswitch 9 turns on, the process vessel 4 stops at a specified stopping position upon completion of rotation, specifically stops at a position slightly inclined toward the front door 1a side of the sink cabinet 1 with the inspection port 7 facing upward as shown in Fig.3. At this stopping position, the drip hole 46 faces downward and the vent hole 47 faces upward. The process vessel 4 maintains this stopping position after the mixing motor 43 stops according to the stop signal from the control unit 102.

Although air is not supplied to the process vessel 4 when it is stationary, air included in the medium B maintains the aerobic activities. Then in a specified period of time after the grinder motor 31 stopped, the control unit 102 sends a signal to run the process vessel 4 to the process vessel driving unit 104, so that the process vessel 4 rotates for a specified period of time thereby exposing the kitchen garbage A to the air and supplying air to the medium B. By controlling the process vessel 4 to rotate as necessary and supplying air to the medium B to keep aerobic activities always going on, the kitchen garbage A can be efficiently decomposed into water and carbon dioxide and eventually disappear.

In the kitchen garbage disposal process carried out as described above, the inspection port 7 is used to inspect the inside of the process vessel 4. Inspection of the inside is carried out, primarily when an undesirable object (plastic bag or the like) which cannot be decomposed by the aschelminthes and micro-organisms has been charged together with the kitchen garbage A into the kitchen garbage charging port 24, to remove this undesirable object. In such a case, the operation switch 101 is immediately turned off to stop the operation and the lid plate 70 of the inspection port 7 is opened to observe the discharge port 30b and its surrounding of the grinder 3 through the inspection port 7 and remove the undesirable object, while the process vessel 4 stops at the stopping position shown in Fig.3 allowing to open the front door 1a of the sink cabinet 1 and make inspection by facing right to the inspection port 7.

In case the process vessel 4 is to rotate in the direction indicated by the arrow in Fig.3, agitation of the medium B due to this rotation causes the medium B to move upward at the rear side of the sink cabinet 1 (left-hand side in the drawing) and slide downward at the front side of the sink cabinet 1 (right-hand side of the drawing). As a consequence, the medium B inside the process vessel 4 at the stopping position as described previously becomes distributed as shown in Fig.3, wherein a cavity is formed at the front upper position of the process vessel 4, namely at the opening position of the inspection port 7. Thus the inspection port 7 can be opened without any fear of the medium B spilling from the inside of the process vessel 4 and the discharge port 30b and its surrounding of the grinder 3 can be surely observed.

The angular position sensor which detects the angular position of the process vessel 4 is not limited to the constitution described in this embodiment, namely to the microswitch 9 which is turned on by the contact with the sensing projection 8 installed on the process vessel 4. Instead, it may be selected from among known angular position sensors such as, for example, an angular position sensor comprising a magnet fixed on the circumference of the process vessel 4 and a reed switch arranged on the circular track of the magnet, and a rotary encoder mounted on the pivot shaft 42 of the process vessel 4.

Control of the processing operation according to the result of detection by the weight sensor 91 will now be described below. The weight sensor 91 detects the weight of the process vessel 4 and outputs the result of detection to the control unit 102. The control unit 102 monitors the state of processing in the process vessel 4, which proceeds as described above, by means of the result of detection by the weight sensor 91.

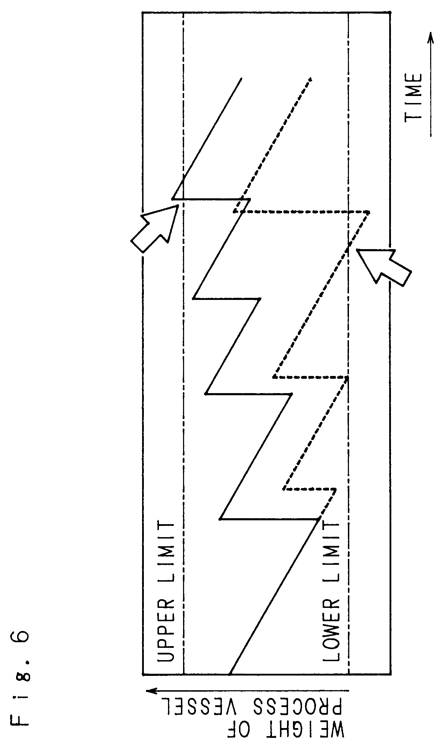

Fig.6 schematically shows the result of detection by the weight sensor 91 changing with time. The weight of the process vessel 4 shows a sudden increase, when the kitchen garbage A is introduced, by the amount of the kitchen garbage introduced, then shows gradual decrease with time as the decomposition process proceeds, thus showing a saw-teeth like changing pattern as shown in the drawing. While the capacity of processing kitchen garbage A in the process vessel 4 depends on the state of reproduction of the aschelminthes and micro-organisms in the medium B, the state of reproduction reaches an equilibrium upon lapse of a specified period of time after the start of operation, thereby providing always stable processing capacity substantially corresponding to the quantity of the medium B. Thus when the kitchen garbage A is charged frequently or if an excessive quantity of kitchen garbage A is charged, the weight of the process vessel 4 increases with time as indicated by the solid line in the drawing.

When the weight of the process vessel 4 as recognized according to the input from the weight sensor 91 exceeds a specified upper limit, it is judged in the control unit 102 that an excessive amount of kitchen garbage A has been charged into the process vessel 4 beyond its processing capacity and that complete decomposition would be made impossible in the subsequent process. Then the control unit 102 sends a display command to the display unit 105 in the timing indicated by a white-inside arrow in the drawing, so that the operator is notified to refrain from charging the kitchen garbage A. According to this display command, a full lamp 105b (see Fig.5) illuminates on the display unit 105. Thus by limiting the charging of the kitchen garbage A according to the illumination of the full lamp 105b, processing of the kitchen garbage A in the process vessel 4 can be always maintained in a proper state.

The medium B in the process vessel 4 will not be decomposed by the aschelminthes and micro-organisms and therefore need not be replenished. However, it is possible that the medium B leak through the vent hole 47 during the rotation of the process vessel 4 or leak through the drip hole 46 during the rotation and standstill of the process vessel 4, thus gradually decreasing with time. In case such a decrease of the medium B happens, the weight of the process vessel 4 decreases over a long period of time as indicated by the dashed line in Fig.6.

When the weight of the process vessel 4 as recognized according to the input from the weight sensor 91 decreases below a specified lower limit, it is judged in the control unit 102 that the medium B has decreased and needs to be replenished. Then the control unit 102 sends a display command to the display unit 105 in the timing indicated by a white-inside arrow in the drawing, so that the operator is notified to add the medium B. According to this display command, a supplement lamp 105c (see Fig.5) illuminates on the display unit 105. Thus decrease in the processing capacity due to shortage of the medium B can be surely prevented by replenishing the medium B according to the illumination of the supplement lamp 105c.

The result of detecting the weight of the process vessel 4 by the weight sensor 91 represents the state of processing in the process vessel 4, and therefore may be used in other purposes than illuminating the full lamp 105b to control the quantity of kitchen garbage A charged and illuminating the supplement lamp 105c to notify to replenish the medium B. For example, change in the weight of the process vessel 4 as shown in Fig.6 may be displayed in a graph against an appropriate time scale for the operator to see the display and decide whether the kitchen garbage disposal process in the process vessel 4 is in a satisfactory state or not, and whether any trouble has occurred in the process vessel 4.

As described above, because the weight sensor 91 is provided to detect the weight of the process vessel 4 so that the kitchen garbage disposal process in the process vessel 4 can be monitored by means of the result of detection by the weight sensor 91, inside of the process vessel 4 can be always kept in a suitable environment to allow the aschelminthes and micro-organisms in the medium B to decompose the kitchen garbage A completely, thereby making it possible to dispose of the kitchen garbage in a sanitary condition without trouble.

The operation to detect the state of overload of the aschelminthes and micro-organisms in the process vessel 4 and the control based on the result of the detection will now be described below. An overload state of the aschelminthes and micro-organisms is detected by means of the water level sensor 92 installed on the side wall of the process vessel 4. When too much kitchen garbage has been charged into the process vessel 4 making the aschelminthes and micro-organisms unable to decompose it completely, water content in the process vessel 4 increases to turn the kitchen garbage A in the process vessel 4 into paste-like condition, wherein adhesion force in the medium B increases and water begins to permeate and accumulate in the circumferential portion which is less influenced by the rotation of the process vessel 4. It has been verified experimentally that the water level in this portion corresponds to the degree of overload of the aschelminthes and micro-organisms, and therefore the degree of overload of the aschelminthes and micro-organisms can be detected by measuring the water level in this portion.

When the quantity of kitchen garbage A charged into the process vessel 4 increases beyond the processing capacity of the aschelminthes and micro-organisms, and accordingly the result of detection by the water level sensor 92 reaches the upper limit, the result of detection is inputted to the control unit 102 to illuminate a no-supply lamp 105d (see Fig.5) on the display unit 105, giving a warning to the operator not to charge kitchen garbage A any more.

The sensor to detect the overload state of the aschelminthes and micro-organisms is not limited to the water level sensor described above, but the odor sensor 93 to detect odor in the process vessel 4, the BOD sensor 94 to detect the BOD level in the waste water discharged from the process vessel 4 or the like may be used instead. When the quantity of kitchen garbage in the process vessel 4 increases to impose overload on the aschelminthes and micro-organisms, the portion of the kitchen garbage A being left from the decomposition process is put into a condition similar to natural decay, causing ammonia gas, methane gas, butane gas, etc. to fill the inside of the process vessel 4. Because the odor increases in proportion to the quantity of kitchen garbage, namely to the degree of overload of the aschelminthes and micro-organisms, the overload state of the aschelminthes and micro-organisms can be detected by detecting the odor. On the other hand, the overload state of the aschelminthes and micro-organisms leads to an increase in the water content in the process vessel 4 and to a decreased rate of kitchen garbage decomposition as described previously, thereby causing stale water to mix in the waste water due to the progress of natural decay resulting from the change in the process described above. As a consequence, the BOD level in the discharged water increases and the quantity of stale water increases according to the degree of overload on the aschelminthes and micro-organisms. Thus the degree of overload on the aschelminthes and micro-organisms can be detected by detecting the BOD level. Also because the discharged water changes its color as stale water mixes therein, the degree of overload on the aschelminthes and micro-organisms can be detected by using an optical sensor which senses the degree of clarity or transparency of the discharged water. When an overload sensor of such a type is used, the no-supply lamp 105d is illuminated to warn the operator to stop charging of the kitchen garbage A when the aschelminthes and micro-organisms are over-loaded, as in the case of the water level sensor.

As described above, because a sensor to detect the overload state of the aschelminthes and micro-organisms is installed, a state of incomplete decomposition can be quickly removed to operate the system continuously under a stable condition.

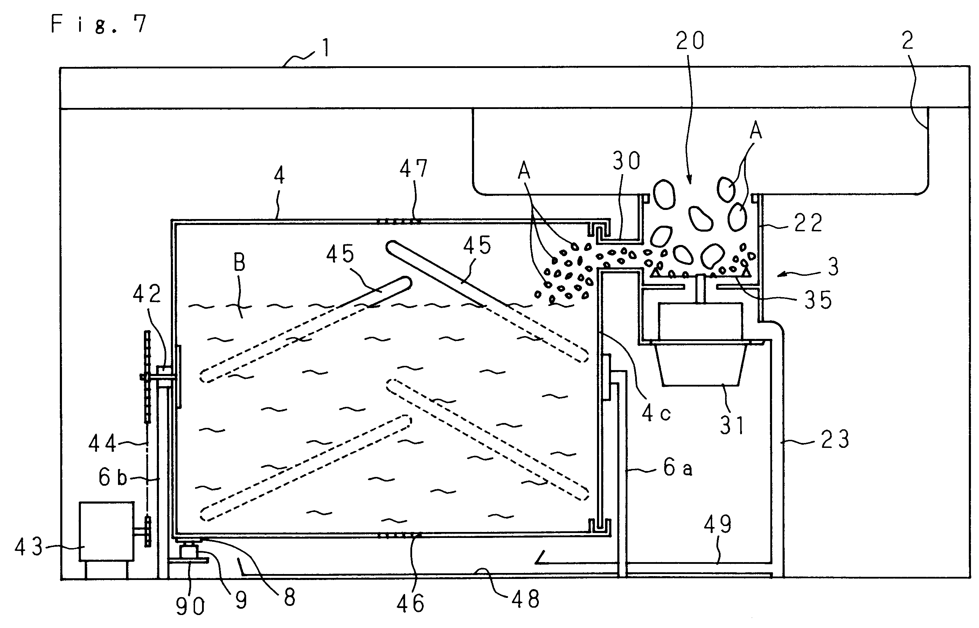

The constitution of the grinder 3 and the process vessel 4 are not limited to that described above, and the constitutions shown in Fig.7 through Fig.12 may also be employed. In these drawings, the portions corresponding to those of the organic kitchen garbage disposal system shown in Fig.1 and Fig.2 are identified with the same numerals with description thereof being omitted. Although various sensors such as the position sensor, weight sensor and the water level sensor of the system shown in Fig.1 and Fig.2 are only partially shown, it will not be necessary to point out that installation of these sensors makes it possible to carry out similar functions as described above.

The organic kitchen garbage disposal systems shown in Fig.7 through Fig.10 are all provided with grinders 3 each having a rotary blade 35 which revolves at a high speed in the horizontal plane being installed to face the discharge port 20 on the front end of the output shaft protruding vertically upward from the grinder motor 31, while kitchen garbage A is ground by the revolution of the rotary blade 35 and is moved outwardly in the radial direction, thereby to be discharged into the process vessel 4 via the conveyance pipe 30.

The process vessels 4 shown in Fig.7 through Fig.10 are different from each other. The organic kitchen garbage disposal system shown in Fig.7 has a process vessel 4 in the form of bottomed cylinder having an opening over the entire area of one side. The conveyance pipe 30 of the grinder 3 is connected to a part of a disk-shaped fixed plate 4c secured, with the center axis being in the horizontal direction, on the front end of a support leg 6a which is erected on the bottom of the sink cabinet 1. The process vessel 4 is supported on the open side by fitting the opening rotatably to the periphery of the fixed plate 4c, and on the other side by having the pivot shaft 42 protruding at the center being held via a bearing by a support leg 6b erected at an appropriate distance from the support leg 6a. Thus the process vessel 4 is driven to rotate by the driving force transmitted from the mixing motor 43 via the transmission chain 44 to the pivot shaft 42.

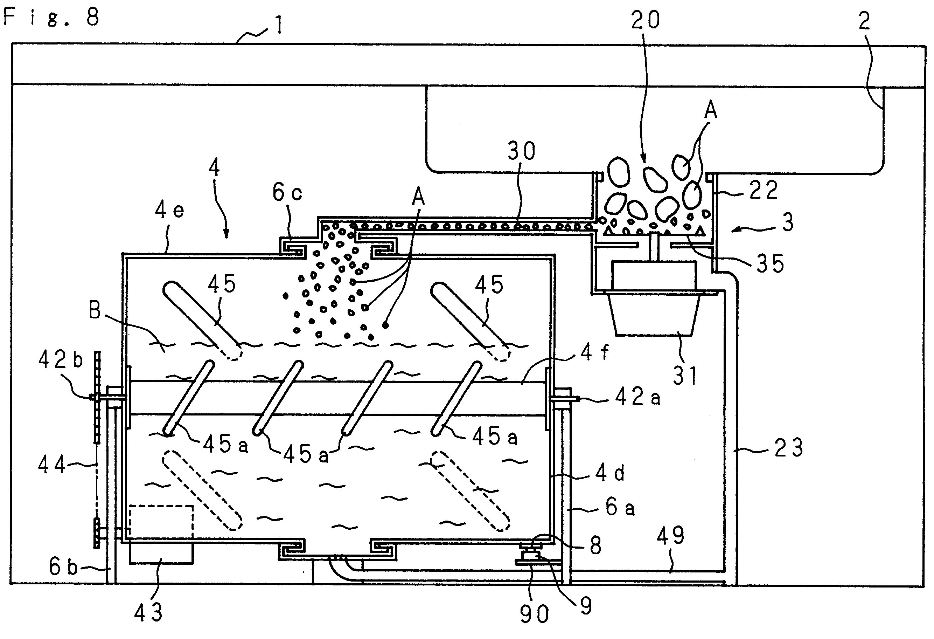

The organic kitchen garbage disposal system shown in Fig.8 has the process vessel 4 including a pair of cylindrical bodies 4d, 4e each having a bottomed cylinder shape with the opening facing each other and a support rod 4f being concentrically fitted at the center to hold the two cylindrical bodies together. The process vessel 4 is horizontally supported by a pair of support legs 6a, 6b erected on the bottom of the sink cabinet 1, with pivot shafts 42a, 42b protruding outwardly at the center of the side walls of the cylindrical bodies 4d, 4e being supported freely rotatably by respective bearings, while the rims of the openings of the cylindrical bodies 4d, 4e, which oppose to each other and are separated by a gap at the center, being fitted to a common fixed cylinder 6c. Thus the process vessel 4 is supported at three points by the fixed cylinder 6c and the support legs 6a, 6b, and is driven to rotate by the driving force transmitted from the mixing motor 43 via the transmission chain 44 to the pivot shaft 42b on the side of the support leg 6b. Kitchen garbage A is introduced into the process vessel 4 through the gap between the cylindrical bodies 4d, 4e via the conveyance pipe 30 of the grinder 3 connected to the top of the fixed cylinder 6c. Water produced in the decomposition process of the kitchen garbage A flows through the gap between the cylindrical bodies 4d, 4e and accumulates at the bottom of the fixed cylinder 6c, and is discharged into the drainage pipe 23 via a communicating pipe 49 which is connected to this point at one end thereof. The support rod 4f has a plurality of stirring vanes 45a the circumference thereof, so that the kitchen garbage A and the medium B can be mixed efficiently as the process vessel 4 rotates, by the action of the stirring vanes 45,.. installed on the inner circumference of the cylindrical bodies 4d, 4e protruding therefrom and the stirring vanes 45a installed on the outer circumference of the support rod 4f.

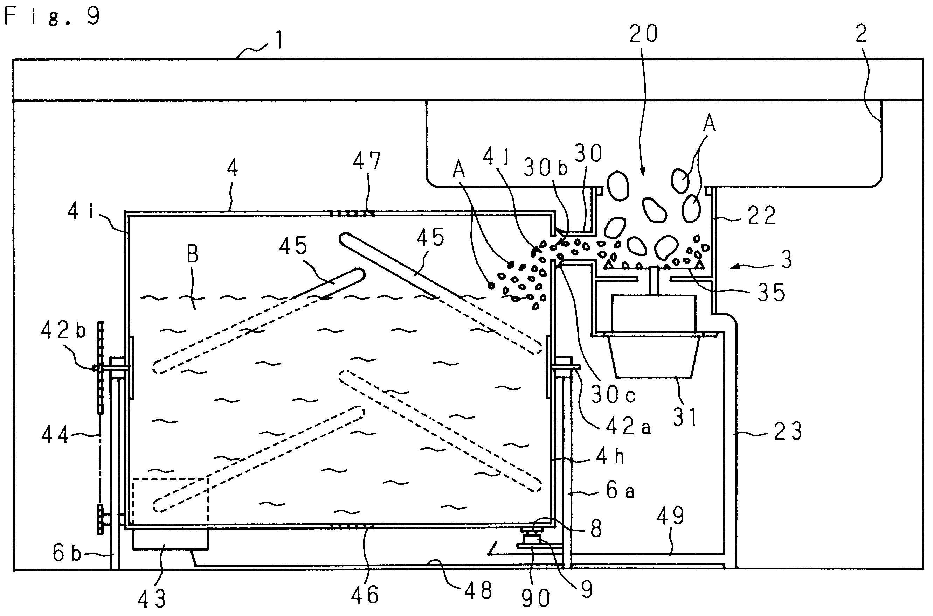

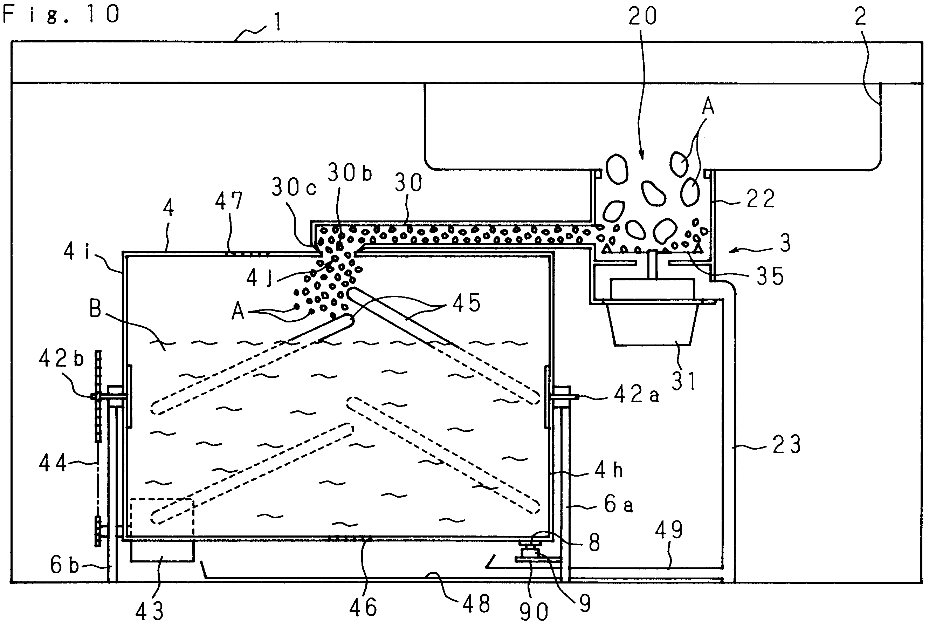

The organic kitchen garbage disposal systems shown in Fig.9 and Fig.10 are each provided with the process vessel 4 having a simple cylindrical shape with both sides closed with side plates 4h, 4i. The process vessel 4, spanning between a pair of support legs 6a, 6b erected at an appropriate distance from each other at the bottom of the sink cabinet 1, is supported via pivot shafts 42a, 42b protruding outwardly at the center of the side plates 4h, 4i, and is driven to rotate by the driving force transmitted from the mixing motor 43 via the transmission chain 44 to the pivot shaft 42 on the support leg 6b side. The kitchen garbage A is introduced into the process vessel 4 through a kitchen garbage introduction port 4j opening at a point on the circumference. In the embodiment shown in Fig.9, the kitchen garbage introduction port 4j is made in one side plate 4h of the process vessel 4 by boring therethrough. In the embodiment shown in Fig.10, the kitchen garbage introduction port 4j is formed in the circumferential wall of the process vessel 4. In the embodiments shown in Fig.9 and Fig.10, the discharge port 30b of the grinder 3 makes contact with the circular track of the kitchen garbage introduction port 4j via a rubber seal ring 30c, in order to be aligned with the kitchen garbage introduction port 4j only when the process vessel 4 is positioned at a specified angular position.

The operation of the organic kitchen garbage disposal systems of the embodiments shown in Fig.9 and Fig.10 is different from that of the embodiments described above. When the discharge port 30b is aligned with the kitchen garbage introduction port 4j, the grinder 3 is started to grind the kitchen garbage A and introduce it into the process vessel 4. When kitchen garbage introduction is completed, the process vessel 4 is driven to rotate in order to mix the kitchen garbage A introduced and the medium B. Thus in these embodiments, it is necessary to stop the process vessel 4, which has completed a rotation for the purpose of mixing, at a position where the discharge port 30b and the kitchen garbage introduction port 4j are aligned, in order to avoid a trouble in introducing the next kitchen garbage A, and the result of the detection by the angular position sensor is used to stop the process vessel 4 at the proper position.

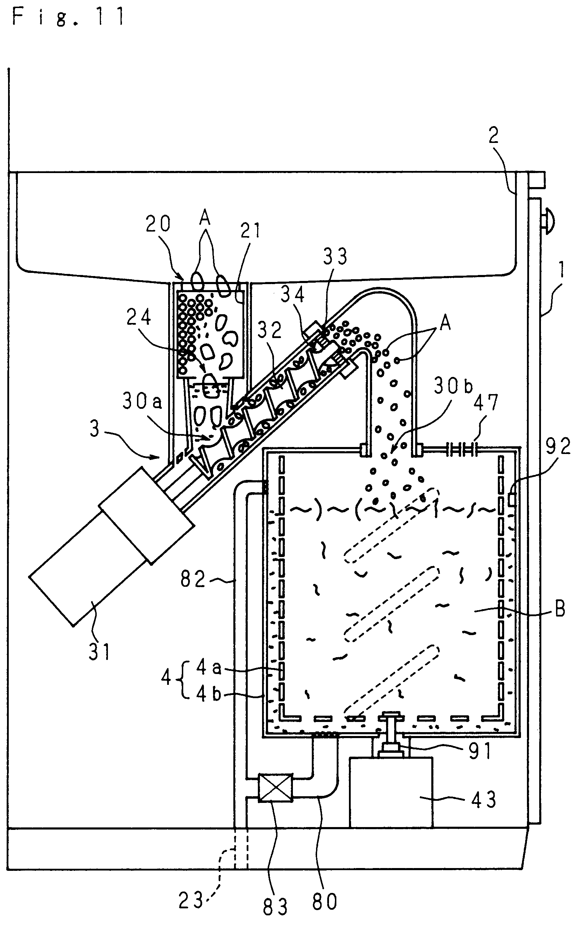

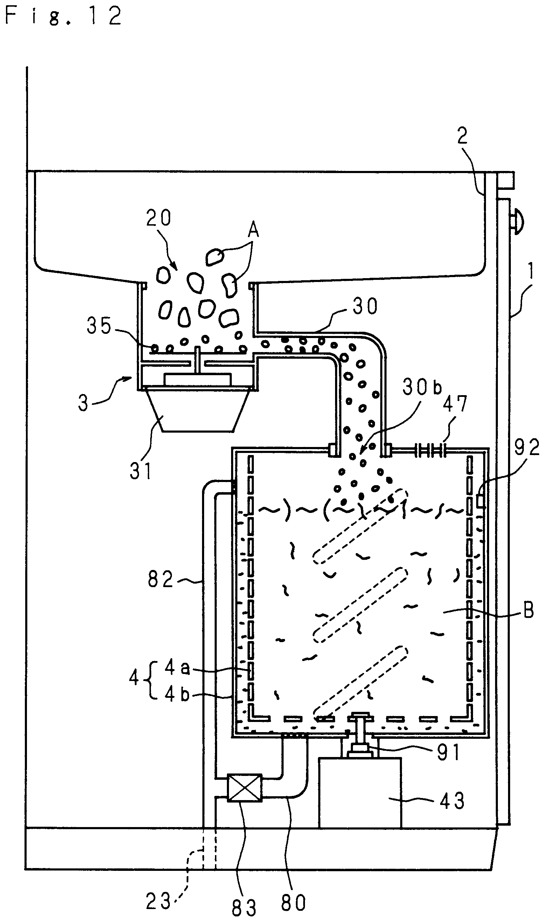

The organic kitchen garbage disposal systems shown in Fig.11 and Fig.12 have process vessels 4 similar to a washing tub, each having a rotary cylinder 4a provided with multiple drip holes on the circumferential surface thereof, and a fixed cylinder 4b which surrounds the rotary cylinder 4a concentrically. An output shaft of the mixing motor 43 which also serves as the support leg for the fixed cylinder 4b is connected to the center of the bottom surface of the rotary cylinder 4a, to drive the rotary cylinder 4a to rotate around the vertical axis by means of the revolution of the mixing motor 43, so that the medium B contained in the rotary cylinder 4a is stirred. The weight sensor 91 installed between the mixing motor 43 and the rotary cylinder 4a to detect the weight of only the rotary cylinder 4a containing the medium B.

Each of these organic kitchen garbage disposal systems has an opening at a height substantially equal to the water level sensor 92, an overflow pipe 82 which connects to the drainage pipe 23 and an electromagnetic valve 83 installed in the middle of a communicating pipe 80 to open and close the pipe. There is no pusher 25 provided to close the kitchen garbage charging port 24, and the kitchen garbage A is directly introduced, together with water used in the kitchen work, into the process vessel 4 with the electromagnetic valve 83 being closed via the grinder 3. After the kitchen garbage A and the medium B have been mixed, the electromagnetic valve 83 is opened to allow the water in the process vessel 4 to flow through the communicating pipe 80 into the drainage pipe 23. Further the conveyance pipe 30 of the grinder 3 is installed being inclined with the front end facing upward, to function as a trap pipe for the purpose of odor control.

Although the above embodiments are described to have such a constitution as integrally incorporated in the sink cabinet 1 at the bottom thereof, the organic kitchen garbage disposal system of the invention can also be embodied in a constitution which is independent of the sink cabinet 1, in which case greater processing capacity can be realized because limitation on the size of the process vessel 4 by the inner volume of the sink cabinet 1 is eliminated. In this case, however, additional work becomes necessary in collecting the kitchen garbage generated in the sink cabinet 1 and carrying it to where the system of the invention is installed and charging it therein.

## Claims

1. Organic kitchen garbage disposal apparatus comprising a process vessel (4) containing a medium (B) to cultivate aschelminthes and micro-organisms,
**characterized by**
grinding means (3) for grinding kitchen garbage (A) charged;
a kitchen garbage discharge port (30b) for discharging the kitchen garbage (A) of said grinding means (3) into the process vessel (4), and
said process vessel (4) being rotatable.

2. Organic kitchen garbage disposal apparatus of Claim 1, wherein
the kitchen garbage discharge port (30b) of said grinding means (3) is installed at the center of rotation of the process vessel (4).

3. Organic kitchen garbage disposal apparatus of Claim 2, further comprising a guide body (36) which is open at the side of rotating direction of said process vessel (4) and is installed at said kitchen garbage discharge port (30b) of said grinding means (3).

4. Organic kitchen garbage disposal apparatus of one of Claims 1-3 further comprising:
position detecting means (8,9) for detecting the rotational position of said process vessel (4); and
means (102,104) for stopping said process vessel (4) at a specified stopping position according to the result of detection by said position detecting means (8,9) when the mixing of the medium (B) and the kitchen garbage (A) is completed.

5. Organic kitchen garbage disposal apparatus of one of Claims 1-4 wherein said process vessel (4) has an inspection opening (7) in the circumference thereof, which can be opened or closed, with said inspection opening (7) facing upward at the specified stopping position.

6. Organic kitchen garbage disposal apparatus of Claim 4 or 5, wherein
said process vessel (4) has a kitchen garbage introduction port (4j) which is aligned with the discharge port (30b) of said grinding means (3) when said process vessel (4) is at a specified angular position, and the specified stopping position described above is a position where this alignment is achieved.

7. Organic kitchen garbage disposal apparatus of one of Claims 1-6 further comprising:
first driving means (31) for driving said grinding means (3); and
second driving means (43) for rotating said process vessel (4).

8. Organic kitchen garbage disposal apparatus of Claim 7, further comprising:
control means (102) for controlling said first and second driving means (31,43) so that said grinding means (3) and said process vessel (4) operate simultaneously.

9. Organic kitchen garbage disposal apparatus of Claim 7, further comprising:
control means (102) for controlling said first and second driving means (31,43) so that said process vessel (4) operates upon a lapse of a specified period of time after said grinding means (3) has started operation.

10. Organic kitchen garbage disposal apparatus of Claim 7, further comprising:
control means (102) for controlling said first and second driving means (31,43) so that said process vessel (4) stops upon a lapse of a specified period of time after said grinding means (3) has stopped.

11. Organic kitchen garbage disposal apparatus of Claim 7, further comprising:
control means (102) for controlling said first driving means (31) so that said grinding means (3) stops upon a lapse of a specified period of time after said grinding means (3) receives a stop command.

12. Organic kitchen garbage disposal apparatus of Claim 7, further comprising:
control means (102) for controlling said first and second driving means (31,43) so that said process vessel (4) starts operation after said grinding means (3) has stopped.

13. Organic kitchen garbage disposal apparatus of Claim 7, further comprising:
control means (102) for controlling said second driving means (43) so that said process vessel (4) is rotated at specified intervals.

14. Organic kitchen garbage disposal apparatus of one of Claims 1-13, further comprising:
weight detecting means (91) for detecting the weight of said process vessel (4).

15. Organic kitchen garbage disposal apparatus of Claim 14, further comprising:
judging means (102) for judging whether kitchen garbage processing in said process vessel (4) is properly carried out or not based on the result of detection by said weight detecting means (91); and
display means (105) for displaying the result of judgment by said judging means (102).

16. Organic kitchen garbage disposal apparatus of Claim 14 or 15 further comprising:
judging means (102) for judging whether said medium (B) should be replenished or not based on the result of detection by said weight detection means (91); and
display means (105) for displaying the result of judgment by said judging means (102).

17. Organic kitchen garbage disposal apparatus of one of Claims 1-16 further comprising:
overload detecting means (92,93,94) for detecting a state of overload on the aschelminthes and the micro-organisms in said process vessel (4).

18. Organic kitchen garbage disposal apparatus of claim 17, further comprising:
display means (105) for displaying the result of detection when an overload state is detected by said overload detecting means (92,93,94).

19. Organic kitchen garbage disposal apparatus of claim 17 or 18, wherein:
said overload detecting means (92,93,94) is a sensor selected from a group consisting of a water level sensor (93) which detects the water level in said process vessel (4), an odor sensor (93) which detects odor in said process vessel (4), and a sensor (94) which detects the biochemical oxygen demand level in the water discharged from said process vessel (4).

## Patentansprüche

1. Entsorgungsvorrichtung für organische Küchenabfälle, die einen Verarbeitungsbehälter (4) aufweist, der ein Medium (B) zum Kultivieren von Aschelminthen und Mikroorganismen enthält,
dadurch gekennzeichnet, daß
eine Mahlvorrichtung (3) zum Zermahlen eingefüllter Küchenabfalle (A) vorgesehen ist;
eine Abgabeöffnung (30b) für Küchenabfälle vorgesehen ist, um die Küchenabfälle (A) der Mahlvorrichtung (3) in den Verarbeitungsbehälter (4) abzugeben, und
der Verarbeitungsbehälter (4) drehbar ist.

2. Entsorgungsvorrichtung für organische Küchenabfälle nach Anspruch 1, wobei die Angabeöffnung (30b) für Küchenabfälle der Mahlvorrichtung (3) im Drehort des Verarbeitungsbehälters (4) angeordnet ist.

3. Entsorgungsvorrichtung für organische Küchenabfälle nach Anspruch 2, ferner mit einem Führungselement (36), das in Drehrichtung des Verarbeitungsbehälters (4) offen ist und an der Angabeöffnung (30b) für Küchenabfälle der Mahlvorrichtung (3) angeordnet ist.

4. Entsorgungsvorrichtung für organische Küchenabfälle nach einem der Ansprüche 1-3, ferner mit:
einer Positionsdetektionsvorrichtung (8, 9) zur Detektion der Drehposition des Verarbeitungsbehälters (4) und
einer Vorrichtung (102, 104), um den Verarbeitungsbehälter (4) an einer bestimmten Halteposition in Abhängigkeit von dem Ergebnis der Detektion durch die Positionsdetektionsvorrichtung (8, 9) anzuhalten, wenn die Mischung des Mediums (B) und der Küchenabfälle abgeschlossen ist.

5. Entsorgungsvorrichtung für organische Küchenabfälle nach einem der Ansprüche 1-4, wobei der Verarbeitungsbehälter (4) eine Inspektionsöffnung (7) an seinem Umfang aufweist, die geöffnet und geschlossen werden kann, wobei die Inspektionsöffnung (7) in der voreingestellten Halteposition nach oben zeigt.

6. Entsorgungsvorrichtung für organische Küchenabfälle nach Anspruch 4 oder 5, wobei der Verarbeitungsbehälter (4) eine Einführungsöffnung (4j) für Küchenabfälle aufweist, die axial zur Abgabeöffnung (30b) der Mahlvorrichtung (3) ausgerichtet ist, wenn der Verarbeitungsbehälter (4) sich an einer voreingestellten Winkelposition befindet, und die oben beschriebene voreingestellte Halteposition eine Position ist, in der diese Ausrichtung stattfindet.

7. Entsorgungsvorrichtung für organische Küchenabfälle nach einem der Ansprüche 1-6, ferner mit einer ersten Antriebsvorrichtung (31), um die Mahlvorrichtung (3) anzutreiben, und einer zweiten Antriebsvorrichtung (43), um den Verarbeitungsbehälter (4) zu drehen.

8. Entsorgungsvorrichtung für organische Küchenabfälle nach Anspruch 7, ferner mit einer Steuervorrichtung (102), um die erste und die zweite Antriebsvorrichtung (31, 43) so zu steuern, daß die Mahlvorrichtung (3) und der Verarbeitungsbehälter (4) gleichzeitig arbeiten.

9. Entsorgungsvorrichtung für organische Küchenabfälle nach Anspruch 7, ferner mit einer Steuervorrichtung (102), um die erste und die zweite Antriebsvorrichtung (31, 43) so zu steuern, daß der Verarbeitungsbehälter (4) nach Verstreichen eines voreingestellten Zeitraums arbeitet, nachdem die Mahlvorrichtung (3) den Betrieb aufgenommen hat.

10. Entsorgungsvorrichtung für organische Küchenabfälle nach Anspruch 7, ferner mit einer Steuervorrichtung (102), um die erste und die zweite Antriebsvorrichtung (31, 43) so zu steuern, daß der Verarbeitungsbehälter (4) nach Verstreichen eines voreingestellten Zeitraums anhält, nachdem die Mahlvorrichtung (3) angehalten hat.

11. Entsorgungsvorrichtung für organische Küchenabfälle nach Anspruch 7, ferner mit einer Steuervorrichtung (102), um die erste Antriebsvorrichtung (31) so zu steuern, daß die Mahlvorrichtung (3) nach Verstreichen eines voreingestellten Zeitraums anhält, nachdem die Mahlvorrichtung (3) einen Befehl zum Anhalten erhalten hat.

12. Entsorgungsvorrichtung für organische Küchenabfälle nach Anspruch 7, ferner mit einer Steuervorrichtung (102), um die erste und die zweite Antriebsvorrichtung (31, 43) so zu steuern, daß der Verarbeitungsbehälter (4) den Betrieb aufnimmt, nachdem die Mahlvorrichtung (3) angehalten hat.

13. Entsorgungsvorrichtung für organische Küchenabfälle nach Anspruch 7, ferner mit einer Steuervorrichtung (102), um die zweite Antriebsvorrichtung (43) so zu steuern, daß sich der Verarbeitungsbehälter (4) in voreingestellten Intervallen dreht.

14. Entsorgungsvorrichtung für organische Küchenabfälle nach einem der Ansprüche 1-13, ferner mit einer Gewichtsdetektionsvorrichtung (91) zur Detektion des Gewichts des Verarbeitungsbehälters (4).

15. Entsorgungsvorrichtung für organische Küchenabfälle nach Anspruch 14, ferner mit einer Bewertungsvorrichtung (102), um auf der Grundlage des Ergebnisses der Detektion durch die Gewichtsdetektionsvorrichtung (91) zu bewerten, ob die Verarbeitung der Küchenabfälle in dem Verarbeitungsbehälter (4) ordentlich ausgeführt wird oder nicht, und
einer Anzeigevorrichtung (105), um das Ergebnis der Bewertung durch die Bewertungsvorrichtung (102) anzuzeigen.

16. Entsorgungsvorrichtung für organische Küchenabfälle nach Anspruch 14 oder 15, ferner mit einer Bewertungsvorrichtung (102), um auf der Grundlage des Ergebnisses der Detektion durch die Gewichtsdetektionsvorrichtung (91) zu bewerten, ob das Medium (B) nachgefüllt werden sollte oder nicht, und einer Anzeigevorrichtung (105), um das Ergebnis der Bewertung durch die Bewertungsvorrichtung (102) anzuzeigen.

17. Entsorgungsvorrichtung für organische Küchenabfälle nach einem der Ansprüche 1-16, ferner mit einer Überlastungsdetektionsvorrichtung (92, 93, 94) zur Detektion einer Überlastung der Aschelminthen und der Mikroorganismen in dem Verarbeitungsbehälter (4).

18. Entsorgungsvorrichtung für organische Küchenabfälle nach Anspruch 17, ferner mit einer Anzeigevorrichtung (105) zum Anzeigen des Ergebnisses der Detektion, wenn ein Überlastungszustand durch die Überlastungsdetektionsvorrichtung (92, 93, 94) detektiert wird.

19. Entsorgungsvorrichtung für organische Küchenabfälle nach Anspruch 17 oder 18, wobei die Überlastungsdetektionsvorrichtung (92, 93, 94) ein Sensor ist, der aus einer Gruppe ausgewählt wurde, die einen Wasserstandssensor (93), der den Wasserstand in dem Verarbeitungsbehälter (4) detektiert, einem Geruchssensor (93), der Geruch in dem Verarbeitungsbehälter (4) detektiert, und einem Sensor (94), der den Stand des biochemischen Sauerstoffbedarfs des Wassers, das aus dem Verarbeitungsbehälter (4) abgegeben wird, detektiert, aufweist.

## Revendications

1. Dispositif d'élimination de déchets ménagers comprenant une cuve de traitement (4) contenant un milieu (B) pour cultiver des aschelminthes et des micro-organismes,
caractérisé par
des moyens de broyage (3) pour broyer des déchets ménagers (A) chargés ;
un orifice de décharge de déchets ménagers (30b) pour décharger les déchets ménagers (A) desdits moyens de broyage (3) jusque dans la cuve de traitement (4), et
ladite cuve de traitement (4) étant rotative.

2. Dispositif d'élimination de déchets ménagers selon la revendication 1, dans lequel
l'orifice de décharge de déchets ménagers (30b) desdits moyens de broyage (3) est placé à hauteur de l'axe de rotation de la cuve de traitement (4).

3. Dispositif d'élimination de déchets ménagers selon la revendication 2, comprenant en outre un corps de guidage (36) qui est ouvert du côté de la direction de rotation de ladite cuve de traitement (4) et qui est installé au niveau dudit orifice de décharge de déchets ménagers (30b) desdits moyens de broyage (3).

4. Dispositif d'élimination de déchets ménagers selon l'une des revendications 1-3, comprenant en outre :
des moyens de détection de position (8, 9) pour détecter la position de rotation de ladite cuve de traitement (4) ; et
des moyens (102, 104) pour arrêter ladite cuve de traitement (4) à une position d'arrêt spécifiée en fonction du résultat de la détection par lesdits moyens de détection de position (8, 9) quand le mélange du milieu (B) et des déchets ménagers (A) est achevé.

5. Dispositif d'élimination de déchets ménagers selon l'une des revendications 1-4, dans lequel ladite cuve de traitement (4) comporte dans la circonférence de celle-ci une trappe d'inspection (7) qui peut être ouverte ou fermée, ladite trappe d'inspection (7) étant orientée vers le haut quand la cuve de traitement est dans la position d'arrêt spécifiée.

6. Dispositif d'élimination de déchets ménagers selon la revendication 4 ou 5, dans lequel
ladite cuve de traitement (4) a un orifice d'introduction de déchets ménagers (4j) qui est aligné avec l'orifice de décharge (30b) desdits moyens de broyage (3) quand ladite cuve de traitement (4) est à une position angulaire spécifiée, et la position d'arrêt spécifiée décrite précédemment est une position dans laquelle cet alignement est effectué.

7. Dispositif d'élimination de déchets ménagers selon l'une des revendications 1-6, comprenant en outre :
des premiers moyens d'entraînement (31) pour entraîner lesdits moyens de broyage (3) ; et
des deuxièmes moyens d'entraînement (43) pour faire tourner ladite cuve de traitement (4).

8. Dispositif d'élimination de déchets ménagers selon la revendication 7, comprenant en outre :
des moyens de commande (102) pour commander lesdits premiers et deuxièmes moyens d'entraînement (31, 43) afin que lesdits moyens de broyage (3) et ladite cuve de traitement (4) fonctionnent simultanément.

9. Dispositif d'élimination de déchets ménagers selon la revendication 7, comprenant en outre :
des moyens de commande (102) pour commander lesdits premiers et deuxièmes moyens d'entraînement (31, 43) afin que ladite cuve de traitement (4) fonctionne au bout d'un laps de temps spécifié après que lesdits moyens de broyage (3) ont commencé à fonctionner.

10. Dispositif d'élimination de déchets ménagers selon la revendication 7, comprenant en outre :
des moyens de commande (102) pour commander lesdits premiers et deuxièmes moyens d'entraînement (31, 43) afin que ladite cuve de traitement (4) s'arrête au bout d'un laps de temps spécifié après que lesdits moyens de broyage (3) se sont arrêtés.

11. Dispositif d'élimination de déchets ménagers selon la revendication 7, comprenant en outre :
des moyens de commande (102) pour commander lesdits premiers moyens d'entraînement (31) afin que lesdits moyens de broyage (3) s'arrêtent au bout d'un laps de temps spécifié après que lesdits moyens de broyage (3) ont reçu une commande d'arrêt.

12. Dispositif d'élimination de déchets ménagers selon la revendication 7, comprenant en outre :
des moyens de commande (102) pour commander lesdits premiers et deuxièmes moyens d'entraînement (31, 43) afin que ladite cuve de traitement (4) commence à fonctionner après que lesdits moyens de broyage (3) se sont arrêtés.

13. Dispositif d'élimination de déchets ménagers selon la revendication 7, comprenant en outre :
des moyens de commande (102) pour commander lesdits deuxièmes moyens d'entraînement (43) afin que ladite cuve de traitement (4) soit mise en rotation à intervalles spécifiés.

14. Dispositif d'élimination de déchets ménagers selon l'une des revendications 1-13, comprenant en outre :
des moyens de détection de poids (91) pour détecter le poids de ladite cuve de traitement (4).

15. Dispositif d'élimination de déchets ménagers selon la revendication 14, comprenant en outre :
des moyens d'évaluation (102) pour évaluer si le traitement des déchets ménagers dans ladite cuve de traitement (4) est réalisé correctement ou non sur base du résultat de la détection par lesdits moyens de détection de poids (91) ; et
des moyens d'affichage (105) pour afficher le résultat de l'évaluation par lesdits moyens d'évaluation (102).

16. Dispositif d'élimination de déchets ménagers selon la revendication 14 ou 15, comprenant en outre :
des moyens d'évaluation (102) pour évaluer s'il faut ou non réalimenter la cuve de traitement en milieu (B) sur base du résultat de la détection par lesdits moyens de détection de poids (91) ; et
des moyens d'affichage (105) pour afficher le résultat de l'évaluation par lesdits moyens d'évaluation (102).

17. Dispositif d'élimination de déchets ménagers selon l'une des revendications 1-16, comprenant en outre :
des moyens de détection de surcharge (92, 93, 94) pour détecter un état de surcharge sur les aschelminthes et les micro-organismes dans ladite cuve de traitement (4).

18. Dispositif d'élimination de déchets ménagers selon la revendication 17, comprenant en outre :
des moyens d'affichage (105) pour afficher le résultat de la détection quand un état de surcharge est détecté par lesdits moyens de détection de surcharge (92, 93, 94).

19. Dispositif d'élimination de déchets ménagers selon la revendication 17 ou 18, dans lequel :
lesdits moyens de détection de surcharge (92, 93, 94) se composent d'un capteur sélectionné parmi un groupe constitué d'un capteur de niveau d'eau (93) qui détecte le niveau d'eau dans ladite cuve de traitement (4), d'un capteur d'odeurs (93) qui détecte les odeurs dans ladite cuve de traitement (4) et d'un capteur (94) qui détecte le niveau de demande biochimique d'oxygène dans l'eau évacuée de ladite cuve de traitement (4).
